# EUROPÄISCHE PATENTSCHRIFT

(11) **EP 1 560 729 B1**
(45) Veröffentlichungstag und Bekanntmachung des Hinweises auf die Patenterteilung: **03.12.2008**
(21) Anmeldenummer: 03775224.3
(22) Anmeldetag: 24.10.2003
(51) Int. Cl.: B60N 2/235

(54) **BESCHLAG FÜR EINEN FAHRZEUGSITZ**
FITTING FOR A VEHICLE SEAT
MECANISME POUR UN SIEGE DE VEHICULE

(30) Priorität: 14.11.2002 DE 10253054
(43) Veröffentlichungstag der Anmeldung: 10.08.2005
(73) Patentinhaber: KEIPER GmbH & Co. KG, 67657 Kaiserslautern (DE)
(72) Erfinder: PETERS, Christoph, 42929 Wermelskirchen (DE)
(74) Vertreter: Patentanwälte Hosenthien-Held und Dr. Held
(86) Internationale Anmeldenummer: PCT/EP2003/011780
(87) Internationale Veröffentlichungsnummer: WO 2004/043733

(56) Entgegenhaltungen:
- EP-A- 1 195 115
- US-A- 5 685 611
- US-A- 5 749 624
- US-A- 5 785 386
- US-A- 5 873 630
- US-A- 6 024 410

## Beschreibung

Die Erfindung betrifft einen Beschlag für einen Fahrzeugsitz, insbesondere einen Rastbeschlag für einen Kraftfahrzeugsitz, mit den Merkmalen des Oberbegriffs des Anspruches 1.

Aus der EP 0 720 930 B1 ist ein Beschlag dieser Art bekannt, bei dem die drei vorgesehenen Riegel in der Nähe ihrer Verzahnung mit seitlich zu ihrer Bewegungsrichtung vorspringenden, durch Absätze begrenzte Materialpartien versehen sind, welche eine höhere Festigkeit aufweisen als die Führung der Riegel. Im Falle einer starken Belastung in Drehrichtung des Beschlags, beispielsweise bei einem Crash, bei welchem über die Lehne ein Drehmoment auf das mit ihr verbundene Beschlagteil wirkt, graben sich diese Materialpartien in die Führungen ein und verhindern so eine Bewegung des jeweiligen Riegels.

Die US 5 785 386 A zeigt einen weiteren Beschlag der eingangs genannten Art mit einem Absatz am Ende der Längsseite direkt am Fuß der äußersten Zähne, womit letztere gegenüber den Längsseiten um etwa eine Zahnbreite zurückgesetzt sind.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß in Bezug auf die zugeordnete Führungsfläche der zweite Abschnitt gegenüber dem ersten Abschnitt zurückspringt, liegt der Riegel nur im ersten Abschnitt an der jeweiligen Führungsfläche an. Erfolgt nun eine Beaufschlagung des zweiten Beschlagteils mit einem großen Drehmoment, insbesondere im Crashfall, kann der Riegel eine Kippbewegung relativ zu den Führungsflächen durchführen Die sehr kleine Abmessung des Absatzes im Bereich von Bruchteilen eines Millimeters begrenzt einerseits die Größe der Kippbewegung in Abstimmung mit dem Spiel des Riegels zwischen den Führungsflächen und erlaubt andererseits, für die Anordnung des Zahnes die Breite des Riegels ohne nennenswerte Einschränkung auszunutzen. Mit der Kippbewegung kann der Riegel dem Beschlagteil folgen, womit der Zahneingriff erhalten bleibt. Damit genügt der erfindungsgemäße Beschlag höheren Lastanforderungen. Der erfindungsgemäße Beschlag kann als Einsteller, beispielsweise als Höheneinsteller oder Neigungseinsteller, bei allen Fahrzeugsitzen mit einstellbaren Baugruppen, beispielsweise mit neigungseinstellbarer Lehne oder höhen- und/oder neigungseinstellbarem Sitzteil, eingesetzt werden.

Bei der Kippbewegung des Riegels dient vorzugsweise die zum ersten Abschnitt hin gelegene Kante des Absatzes als Schwenkachse. Die Position des Absatzes ist vorzugsweise so gewählt, daß die jeweiligen Flächennormale der vorhandenen Zahnflanken die zugeordnete Längsseite des Riegels im zweiten Abschnitt schneidet. Die von der Verzahnung des zweiten Beschlagteils übertragene Kraft, deren Wirkungslinie mit dieser Flächennormalen übereinstimmt, bewirkt ein Drehmoment auf den Riegel, welches die Kippbewegung des Riegels unterstützt.

In einer bevorzugten Ausführungsform ist der Riegel doppelt abgestützt auf einem Exzenter, welcher auf den Riegel von dessen radial innen gelegener Seite her einwirkt, um diesen radial nach außen zu bewegen. Die Kippbewegung kann dann besser abgestützt werden, wobei im Falle von zwei diagonal gegenüberliegenden Riegeln diese eine Belastung des zweiten Beschlagteils aufnehmen und diagonal durch den Exzenter leiten. Dadurch können höhere Kräfte übertragen werden und somit höhere Festigkeiten erreicht werden.

Im folgenden ist die Erfindung anhand eines in der Zeichnung dargestellten Ausführungsbeispiels näher erläutert. Es zeigen
- Fig. 1: einen Schnitt durch das Ausführungsbeispiel entlang der Linie I-I in Fig. 3,
- Fig. 2: einen mit dem Ausführungsbeispiel versehenen, schematisierten Fahrzeugsitz,
- Fig. 3: einen Schnitt durch das Ausführungsbeispiel entlang der Linie III-III in Fig. 1,
- Fig. 4: eine unmaßstäbliche Teilansicht im normalen, verriegelten Zustand, und
- Fig. 5: eine entsprechend Teilansicht im Crashfall.

Ein Fahrzeugsitz 1 eines Kraftfahrzeuges weist für die Neigungseinstellung seiner Lehne 3 auf seinen beiden Seiten je einen Beschlag 5 auf, der als Rastbeschlag ausgebildet ist. Die beiden Beschläge 5 stehen mittels einer Übertragungsstange 7 miteinander in Getriebeverbindung. Ein drehfest auf der Übertragungsstange 7 sitzender Handhebel 9 dient der manuellen Betätigung der Beschläge 5. Die nachfolgenden Richtungsangaben des Beschlags 5 beziehen sich auf das durch die Übertragungsstange 7 definierte Zylinderkoordinatensystem.

Jeder Beschlag 5 weist als erstes Beschlagteil ein Beschlagunterteil 11 und als zweites Beschlagteil ein Beschlagoberteil 12 auf, welche durch nicht näher dargestellte Haltebleche in axialer Richtung zusammen gehalten werden. Das sitzteilfeste Beschlagunterteil 11 ist mit vier Führungs- und Lagersegmenten 15 versehen, welche radial außen eine zylindrisch geformte, viermal unterbrochene Lagerfläche für eine entsprechend gekrümmte, radial nach innen weisende Lagerfläche des als Hohlrad ausgebildeten lehnenfesten Beschlagoberteils 12 bilden. Auf dieser Lagerfläche des Beschlagoberteils 12 ist außerdem eine Verzahnung 14 ausgebildet. Je zwei Führungs- und Lagersegmente 15 bilden zusammen eine radial verlaufende, durch parallele Führungsflächen 17 definierte Führung für ein radial beweglich angeordnetes Zahnsegment 19.

Jedes Zahnsegment 19 trägt als Riegel auf einer konvex gekrümmten, radial weiter außen gelegenen Seite eine Vielzahl von Zähnen 21, welche mit der Verzahnung 14 des Beschlagoberteils 12 zusammenwirken können, um den Beschlag 5 zu verriegeln. Die zugehörigen zwei Führungs- und Lagersegmente 15 führen mittels der Führungsflächen 17 die später genauer beschriebenen, in Bewegungsrichtung des Zahnsegments 19 verlaufenden Längsseiten 22. Die radial innen gelegene Seite des Zahnsegments 19 trägt zwei konvexe, von einander beabstandete Sperrnocken 23.

Um die beiden Zahnsegmente 19 radial nach außen (in Sperrichtung) zu drücken, ist ein scheibenförmiger Exzenter 25 vorgesehen, welcher mittels eines buchsenförmigen Mitnehmerelementes 27 auf der Übertragungsstange 7 sitzt. Während das Mitnehmerelement 27 drehfest auf der Übertragungsstange 7 sitzt, ist zwischen dem Exzenter 25 und dem Mitnehmerelement 27 ein Leerhub in Drehrichtung vorgesehen, welcher Torsionen der Übertragungsstange 7 und Stellungsunterschiede der, beiden Beschläge 5 ausgleicht.

Der Exzenter 25 ist durch zwei spiralförmige Federn 29 in eine Drehrichtung vorgespannt, und zwar in die Schließrichtung. Am Außenumfang des Exzenters 25 sind vier radial nach außen vorspringende Exzenternocken 31 mit je einer Spannfläche vorgesehen, welche bezüglich der Übertragungsstange 7 exzentrisch gekrümmt ist. In Umfangsrichtung zwischen den Exzenternocken 31 ist der Exzenter 25 soweit radial nach innen abgesetzt, daß die Sperrnocken 23 Aufnahme finden können.

Eine Mitnehmerscheibe 35, welche drehfest auf dem Exzenter 25 sitzt und welche auf an sich bekannte Weise über Schlitz-Zapfen-Führungen mit den beiden Zahnsegmenten 19 zusammenwirkt, dient der Rückholung der Zahnsegmente 19 in radialer Richtung nach innen, also der Entriegelung, welche durch eine Drehung der Übertragungsstange 7 mittels des Handhebels 9 eingleitet wird.

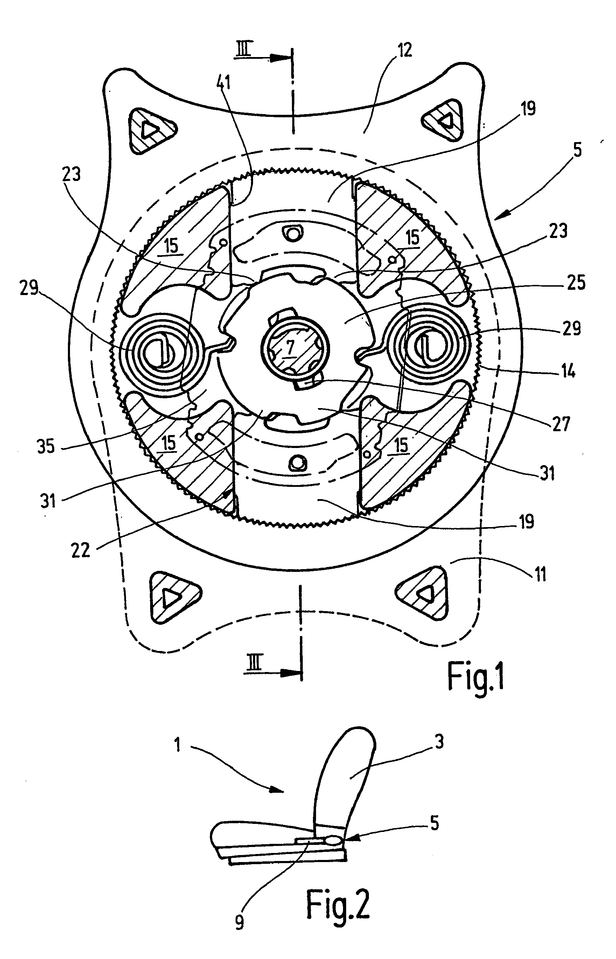

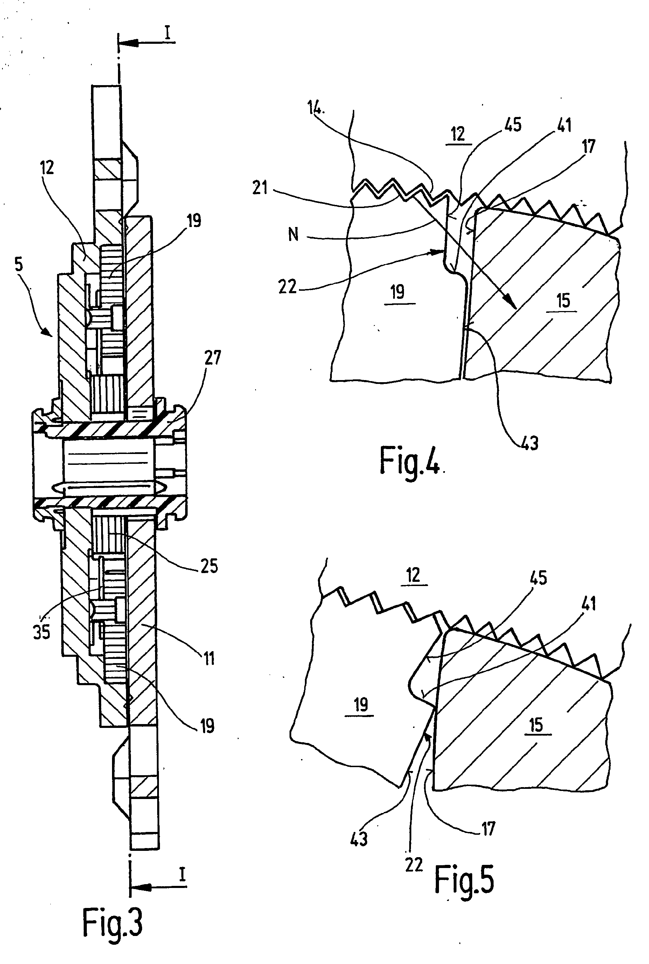

Die Längsseiten 22 sind nicht durchgehend ausgebildet. Vielmehr ist jeweils ungefähr bei zwei Dritteln, also näher zu den Zähnen 21 hin, ein Absatz 41 vorgesehen, welcher die Längsseite 22 in einen ersten Abschnitt 43, der als Anlagefläche an einer Führungsfläche 17 anliegt, und in einen zurückspringenden, zweiten Abschnitt 45, der als Freifläche zur Führungsfläche 17 beabstandet ist, teilt. Der zweite Abschnitt 45 erstreckt sich vom Absatz 41 bis zu den Zähnen 21, während der erste Abschnitt 43 sich vom Absatz 41 bis zu den Sperrnocken 23 erstreckt. Das Zurückspringen wird durch geeignetes Beschneiden des Zahnsegments 19 erreicht. Das Ausmaß, also die Abmessung des Absatzes 41 quer zur Längsrichtung des Zahnsegments 19, liegt nur im Bereich von Bruchteilen eines Millimeters, so daß die Detailgestaltung der Längsseiten 22 in der maßstäblichen Fig. 1 schlecht zu erkennen ist, weswegen in den Fig. 4 und 5 eine unmaßstäbliche Darstellung gewählt ist.

Ausgehend von einem entriegelten Zustand, in welchem sich die beiden Zahnsegmente 19 radial innen befinden, wird durch die Vorspannung der Federn 29 der Exzenter 25 so gedreht, daß die Exzenternocken 31 zunächst in Anlage an die Sperrnocken 23 gelangen und bei der weiteren Drehung über die Sperrnocken 23 die doppelt abgestützten Zahnsegmente 19 nach außen drücken. Sobald die Zahnsegmente 19 in Eingriff mit dem Beschlagoberteil 12 gelangen, ist der jeweilige Beschlag 5 verriegelt.

Wird im verriegelten Zustand das Beschlagoberteil 12 mit einem großen Drehmoment belastet, beispielsweise im Crashfall, werden über die Verzahnung 14 und die eingreifenden Zähne 21 die Zahnsegmente 19 quer zu ihrer Bewegungsrichtung in Richtung der Führungsfläche 17 gekippt, wobei die an den ersten Abschnitt 43 anschließende Kante des Absatzes 41 als Schwenkachse dient und eine entgegengesetzte Sperrkraft aufgrund der randseitigen Abstützung des zugeordneten Sperrnokkens 23 auf dem Exzenter 25 aufgebaut wird.

Die Flächennormale N der beaufschlagten Zahnflanke der Zähne 21 schneidet die (bei der Kippbewegung radial innen liegende, den als Schwenkachse dienenden Absatz 41 aufweisende) Längsseite 22 im zweiten Abschnitt 45 (in der Zeichnung oberhalb des Absatzes 41), d.h. die Kippbewegung wird verstärkt, während bei dem eingangs beschriebenen, bekannten Beschlag die Flächennormale die Längsseite unterhalb des Absatzes schneiden würde, also ein Moment der Kippbewegung entgegen wirken würde.

Unter hoher Drehmomentbelastung des Beschlags 5 weitet sich das Beschlagoberteil 12 aufgrund von Materialdehnungen radial, wodurch sich der Durchmesser der Verzahnung 14 vergrößert. Durch die Kippbewegung des Zahnsegments 19 einerseits und die Abstützung des Sperrnockens 23 am Exzenternocken 31 andererseits, welche das Zahnsegment 19 in der Sperrposition hält und nachführt, vergrößert sich der radiale Abstand der Zähne 21 des Zahnsegments 19, bezogen auf die Mittelachse der Übertragungsstange 7, d.h. auf das Zentrum des Beschlags 5. Durch die erfindungsgemäße Lösung aber folgen die Zähne 21 besser der sich weitenden Verzahnung 14, womit der Zahneingriff erhalten bleibt.

### Bezugszeichenliste

- 1: Fahrzeugsitz
- 3: Lehne
- 5: Beschlag
- 7: Übertragungsstange
- 9: Handhebel
- 11: erstes Beschlagteil, Beschlagunterteil
- 12: zweites Beschlagteil, Beschlagoberteil
- 14: Verzahnung (des Beschlagoberteils 12)
- 15: Führungs- und Lagersegment
- 17: Führungsfläche
- 19: Riegel, Zahnsegment
- 21: Zahn (des Zahnsegments 19)
- 22: Längsseite
- 23: Sperrnocken
- 25: Exzenter
- 27: Mitnehmerelement
- 29: Feder
- 31: Exzenternocken
- 41: Absatz
- 43: erster Abschnitt
- 45: zweiter Abschnitt

## Patentansprüche

1. Beschlag für einen Fahrzeugsitz, insbesondere Rastbeschlag für einen Kraftfahrzeugsitz, mit einem ersten Beschlagteil (11), einem relativ zum ersten Beschlagteil (11) verdrehbaren und verriegelbaren zweiten Beschlagteil (12) und wenigstens einem Riegel (19), der mit seinen Längsseiten (22) zwischen Führungsflächen (17) des ersten Beschlagteils (11) in radialer Richtung beweglich angeordnet ist und zum Verriegeln auf seiner radial außen gelegenen Seite mittels wenigstens eines Zahns (21) mit einer Verzahnung (14) des zweiten Beschlagteils (12) zusammenwirkt, wobei die Längsseiten (22) jeweils wenigstens einen Absatz (41) aufweisen, welcher die jeweilige Längsseite (22) in einen ersten Abschnitt (43) und einen daran anschließenden zweiten Abschnitt (45) zwischen Absatz (41) und Zahn (21) teilt, **dadurch gekennzeichnet, daß** die Abmessung des Absatzes (41) quer zur Längsseite (22) im Bereich von Bruchteilen eines Millimeters liegt und daß in Bezug auf die zugeordnete Führungsfläche (17) der zweite Abschnitt (45) gegenüber dem ersten Abschnitt (43) zurückspringt.

2. Beschlag nach Anspruch 1, **dadurch gekennzeichnet, daß** bei Beaufschlagung des zweiten Beschlagteils (12) mit einem großen Drehmoment, insbesondere im Crashfall, der Riegel (19) eine Kippbewegung relativ zu den Führungsflächen (17) durchführt.

3. Beschlag nach Anspruch 2, **dadurch gekennzeichnet, daß** die zum ersten Abschnitt (43) hin gelegene Kante des Absatzes (41) als Schwenkachse dient.

4. Beschlag nach Anspruch 2 oder 3, **dadurch gekennzeichnet, daß** der Zahn (21) bei der Kippbewegung der sich bewegenden oder radial weitenden Verzahnung (14) folgt.

5. Beschlag nach einem der Ansprüche 2 bis 4, **dadurch gekennzeichnet, daß** die Flächennormale (N) der Flanke des Zahnes (21) die Längsseite (22) im zweiten Abschnitt (45) schneidet.

6. Beschlag nach einem der Ansprüche 1 bis 5, **dadurch gekennzeichnet, daß** ein Exzenter (25) vorgesehen ist, der relativ zu den Beschlagteilen (11, 12) drehbar ist und der auf den Riegel (19) auf dessen radial innen gelegener Seite einwirkt, um diesen radial nach außen zu bewegen, wobei der Exzenter (25) über zwei von einander beabstandete Stellen (23, 31) auf den Riegel (19) einwirkt.

7. Beschlag nach Anspruch 6, **dadurch gekennzeichnet, daß** zwei diagonal gegenüberliegende Riegel (19) vorgesehen sind, welche bei einer Belastung des zweiten Beschlagteils (12) die von ihnen aufgenommene Last diagonal durch den Exzenter (25) leiten.

8. Fahrzeugsitz (1) mit einer Lehne (3), **gekennzeichnet durch** einen Beschlag (5) nach einem der Ansprüche 1 bis 7 zur Neigungseinstellung der Lehne (3).

## Claims

1. Fitting for a vehicle seat, in particular a detent fitting for an automobile seat, having a first fitting part (11), a second fitting part (12) rotatable and lockable relative to first fitting part (11), and at least one locking element (19), being movably arranged in a radial direction, with its longitudinal sides (22) being between the guiding surfaces (17) of the first fitting part (11) and cooperating, for the purposes of locking, on its radially outer side, by means of at least one tooth (21), with a toothing (14) on the second fitting part (12), each of the longitudinal sides (22) comprising at least one step (41) dividing the respective longitudinal side (22) into a first section (43) and an adjacent second section (45) between the step (41) and the tooth (21), **characterized in that** the dimension of the step (41) transversally to the longitudinal sides (22), is in the order of fractions of a millimeter, and that, with respect to the associated guiding surface (17), the second section (45) is set back relative to the first section (43).

2. Fitting according to Claim 1, **characterized in that**, in the event of high torque impact on the second fitting part (12), in particular in the event of a crash, the locking element (19) performs a tilting movement relative to the guiding surfaces (17).

3. Fitting according to Claim 2, **characterized in that** the edge of the step (41) located towards the first section (41) serves as a swivel axis.

4. Fitting according to Claim 2 or 3, **characterized in that**, in the course of the tilting movement, the tooth (21) follows the toothing (14) as it moves or widens radially.

5. Fitting according to one of Claims 2 to 4, **characterized in that** the surface normal (N) of the side of the tooth (21) intersects with the longitudinal side (22) in the second section (45).

6. Fitting according to Claims 1 to 5, **characterized in that** an eccentric (25) is provided that is rotatable relative to the fitting parts (11, 12), and that acts upon the locking element (19) on its radially inward-lying side for pushing it radially outward, wherein the eccentric (25) is acting upon the locking element (19) via two points (23, 31) at a distance from one another.

7. Fitting according to Claim 6, **characterized in that** two locking elements (19) diagonally opposite each other are provided, which, in the event of torque being applied on the second fitting part (12), transmit the load borne by them diagonally through the eccentric (25).

8. Vehicle seat (1) with a backrest (3), **characterized by** a fitting (5) according to one of Claims 1 to 7 for the inclination adjustment of the backrest (3).

## Revendications

1. Armature pour un siège de véhicule, en particulier armature à encliquetage pour un siège de véhicule automobile, comportant une première partie d'armature (11), une deuxième partie d'armature (12) apte à tourner et verrouillable par rapport à la première partie d'armature (11) et au moins un verrou (19), qui est monté déplaçable en direction radiale avec ses côtés longitudinaux (22) entre des surfaces de guidage (17) de la première partie d'armature (11), et coopère, pour le verrouillage, sur son côté s'étendant radialement vers l'extérieur au moyen d'au moins une dent (21) avec une denture (14) de la deuxième partie d'armature (12), les côtés longitudinaux (22) présentant chacun au moins un gradin (41), lequel sépare le côté longitudinal respectif (22) en une première section (43) et une deuxième section (45) se raccordant à celle-ci entre le gradin (41) et la dent (21), **caractérisée par le fait que** la dimension du gradin (41) transversalement au côté longitudinal (22) se situe dans la plage de fractions d'un millimètre et que, par référence à la surface de guidage associée (17), la deuxième section (45) est rentrante par rapport à la première section (43).

2. Armature selon la revendication 1, **caractérisée par le fait que**, lorsque la deuxième partie d'armature (12) est soumise à un grand couple de rotation, en particulier en cas de collision, le verrou (19) exécute un mouvement basculant par rapport aux surfaces de guidage (17).

3. Armature selon la revendication 2, **caractérisée par le fait que** le bord du gradin (41) s'étendant vers la première section (43) sert d'axe de pivotement.

4. Armature selon l'une des revendications 2 ou 3, **caractérisée par le fait que** la dent (21) lors du mouvement basculant suit la denture (14) qui se déplace ou s'élargit radialement.

5. Armature selon l'une des revendications 2 à 4, **caractérisée par le fait que** la normale de surface (N) du flanc de la dent (21) coupe le côté longitudinal (22) dans la deuxième section (45).

6. Armature selon l'une des revendications 1 à 5, **caractérisée par le fait qu'**il est prévu un excentrique (25), qui est apte à tourner par rapport aux parties d'armature (11, 12) et qui agit sur le verrou (19) sur son côté s'étendant radialement vers l'intérieur, pour déplacer celui-ci radialement vers l'extérieur, l'excentrique (25) agissant sur le verrou (19) par l'intermédiaire de deux emplacements (23, 31) distants l'un de l'autre.

7. Armature selon la revendication 6, **caractérisée par le fait que** sont prévus deux verrous (19) s'étendant l'un vis-à-vis de l'autre en diagonale, lesquels, pour une charge de la deuxième partie d'armature (12), dirigent la charge reçue par eux en diagonale par l'excentrique (25).

8. Siège de véhicule (1) présentant un dossier (3), **caractérisé par** une armature (5) telle que définie à l'une des revendications 1 à 7, pour le réglage de l'inclinaison du dossier (3).
